# EUROPEAN PATENT SPECIFICATION

(11) **EP 0 486 733 B1**
(45) Date of publication and mention of the grant of the patent: **25.01.1995**
(21) Application number: 90312629.0
(22) Date of filing: 20.11.1990
(51) Int. Cl.: C09D 7/12, C08J 7/04

(54) **Matted film**
Matter Film
Film mat

(43) Date of publication of application: 27.05.1992
(73) Proprietor: SOMAR CORPORATION, Tokyo 104 (JP)
(72) Inventor: Kiryu, Naohiko, Urawa-shi, Saitama-ken (JP); Tomiki, Masatoshi, Koshigaya-shi, Saitama-ken (JP); Yamamoto, Shinichi, Yashio-shi, Saitama-ken (JP); Higami, Tatuhiko, Adachi-ku, Tokyo (JP)
(74) Representative: Allam, Peter Clerk

(56) References cited:
- US-A- 3 411 907
- US-A- 4 684 675
- DATABASE WPIL, AN=89-072659 [10], Derwent Publications Ltd, London, GB; & JP-A-1 024 785
- DATABASE WPIL, AN=86-096600 [15], Derwent Publications Ltd, London, GB; & JP-A-61 040 197

## Description

This invention relates generally to a composite material and, more specifically, to a matted film having improved pencil and ink take properties.

Matted films are known which include a transparent plastic film having coated thereon a mat layer containing a binder and finely divided inorganic particles (Japanese Published Unexamined Patent Application No. 60-88037). Because of the presence of the fine particles, the surface of the mat layer is slightly roughened. As a result, the matted film is writable with a pencil, a liquid ink pen (e.g. drawing pen) or a ball-point pen, and permits a photosensitive coating to be provided thereon. Thus, such a matted film is widely utilized in many applications, for example, as tracing films for drawing and as image transfer sheets for PPC (plain paper copy).

The known matted films have a problem that tips of pens are abraded during use due to the presence of the inorganic particles in the mat layer. Another problem of the conventional matted films is that they are not of a general-use type. Thus, there have been no matted films suited for being written on with any writing instrument.

It is, therefore, an object of the present invention to provide a matted film which has good writability with various writing instruments, and which causes less abrasion of pen tips.

The composite material in accordance with the present invention comprises a film formed of a synthetic resin, and a mat layer provided over at least one surface of said film and containing a binder resin and a matting agent consisting of an organic filler having an average particle size of 10 »m or less and an inorganic filler and is characterized by the features that:
(a) the inorganic filler has an average particle size of 10 »m and is selected from sericite, calcined sericite, kaolin minerals, calcined kaolin minerals, pyrophyllite, calcined pyrophyllite and mixtures thereof;
(b) the weight ratio of the organic filler to the inorganic filler ranges from 1.4:1 to 11.5:1; and
(c) the weight ratio of the matting agent to the binder resin is 0.05:1 to 0.7:1.

The invention will now be described in more detail with reference to the accompanying drawings, in which:
the sole FIGURE is a cross-sectional view diagrammatically showing one embodiment of a matted film according to the present invention.

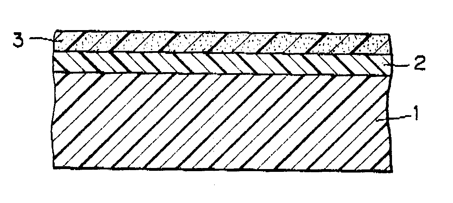

Referring now to Fig. 1, the reference numeral 1 denotes a transparent or translucent film formed of a synthetic resin such as a polyester, a polyamide, a polypropylene, a cellulose acetate, a polyvinyl chloride, a polystyrene, polymethacrylate, a methacrylate copolymer or a polycarbonate. The preferred film 1 is a polyethylene terephthalate film, a cellulose ester film or a polypropylene film. The thickness of the film 1 is not specifically limited but generally in the range of 25-300 »m.

Designated as 2 is an anchor layer formed of a polymeric material. The anchor layer 2, which is not essential but is optional, has generally a thickness of 0.02-3 »m and serves to improve the adhesion of the mat layer, which is described hereinafter, to the film 1.

Provided over the anchor layer 2 is the above-mentioned mat layer 3 formed by applying a coating liquid containing a binder and a matting agent to the anchor layer 2. The mat layer 3 has generally a thickness of 1-30 »m, preferably 2-15 »m.

The matting agent is a mixture consisting of an organic filler having an average particle size of 10 »m or less, preferably of 0.59 »m, more preferably 1-6 »m, and an inorganic filler likewise having an average particle size of 10 »m or less, preferably 0.5-9 »m, more preferably 1-6 »m. The matting agent generally has a particle size of 20 »m or less.

As the organic filler, there may be used synthetic polymer particles which are preferably spherical in shape. Illustrative of suitable synthetic polymers of which the organic filler is formed are polyolefins (e.g. polyethylene and polypropylene), polystyrenes, polyesters, polyamides, phenol resins, benzoguanamine resins, benzoguanamine-melamine resins and melamine resins. These Polymers are desired to have a cross-linked structure. Especially preferred is the use of cross-linked benzoguanamine resins, cross-linked benzoguanamine-melamine resins and cross-linked melamine resins since they give a uniform mat layer.

It is important that the inorganic filler should be sericite, calcined sericite, kaolin minerals, calcined kaolin minerals, pyrophyllite, calcined pyrophyllite or mixtures thereof. Examples of kaolin minerals include kaolinite, kaolin, halloysite, metahalloysite, nacrite and mixtures thereof. These inorganic fillers are desired to have a spherical shape.

It is also important that the weight ratio of the organic filler to the inorganic filler in the matting agent should be in the range of 1.4:1 to 11.5:1. As the proportion of the organic filler in the matting agent becomes less than the above-specified range, the resulting matted film will cause abrasion of ink pens and will become unsatisfactory in both erasability of pencil patterns written thereon and rewritability with pencils after erasure. On the other hand, when the organic filler is used in an excess amount, the erasability of pencil patterns written on the resulting matted film and the rewritability with pencils after erasure deteriorates.

The matting agent and binder are used in amounts such that the weight ratio of the matting agent to the binder resin (on solid basis) is 0.05:1 to 0.7:1.

As the binder, there may be used any conventionally used polymeric material such as a thermoplastic resin, a thermosetting resin or a resin curable by irradiation of UV rays. The binder is generally used in the form of a solution in a suitable solvent or in the form of an emulsion. Examples of suitable binders include thermosetting polyurethane resins, polyester resins, urea-formaldehyde resins, melamine resins and acrylic resins.

A preferred composition of a coating liquid for the formation of the mat layer 3 includes:
(a) an acrylic resin emulsion;
(b) a melamine resin and/or a urea-formaldehyde resin;
(c) a nonionic surfactant;
(d) a crosslinking catalyst; and
(e) the above matting agent.

The above components (a)-(d) will be explained in more detail below.
(a) Acrylic resin emulsion:
   An emulsion of an acrylic resin such as a homopolymer or copolymer of an acrylic monomer such as acrylic acid, methacrylic acid, an acrylate (e.g. methyl acrylate or ethyl acrylate), a methacrylate (e.g. methyl methacrylate or ethyl methacrylate) or acrylonitrile is used. Vinyl acetate and styrene are suitable examples of comonomers of the acrylic copolymers. This component of the binder serves to impart both suitable rigidity and adhesivity to the mat layer.
(b) Melamine resin/Urea-formaldehyde resin:
   Any known water-soluble melamine resin and urea-formaldehyde resin may be used. This component of the binder serves to improve resistance to solvents of the mat layer and is generally used in an amount of 0.05-4 parts by weight per part by weight of the acrylic resin (on solid basis).
(c) Nonionic surfactant:
   The surfactant is used for the purpose of increasing the viscosity of a coating liquid for the formation of the mat layer so as to prevent precipitation of the matting agent and to improve efficiency of coating operations. The surfactant is generally used in an amount of 0.01-5 % by weight based on the coating composition.
(d) Catalyst:
   Ammonium chloride and ammonium oxalate may be suitably used. The catalyst is considered to serve to function as a crosslinking catalyst for both the melamine resin (and/or urea-formaldehyde resin) and the acrylic emulsion. The catalyst is generally used in an amount of 0.1-5 % by weight based on the total binder resin content (on solid basis).

The mat layer 3 may be obtained by coating the above coating composition dispersed in a suitable medium such as water, followed by drying and heating generally at 110-150 °C.

The following examples will further illustrate the present invention. Parts are by weight.

### Example 1

A dispersion containing 10 parts of a melamine resin, 100 parts of an acrylic emulsion (solid content: 43 % by weight), 0.4 part of ammonium chloride, 12 parts of a matting agent as shown in Table 1 and 63 parts of water was prepared by homogeneously mixing the above composition. The resultant dispersion was applied over a surface of a polyethylene terephthalate film (thickness: 50 »m) and dried at 140 °C to form a mat layer having a thickness of 5 »m. The average particle sizes of the organic and inorganic fillers used for the formation of the matting agents shown In Table 1 are as follows:
Inorganic filler: 1.4 »m (kaolin)
Organic filler: 2 »m (benzoguanamine resin particles) The thus obtained matted films were tested for their pen tip abrasion tendency, pencil writability, ink pen writability, ball point pen writability, pencil pattern erasability and pencil rewritability after erasion. Test methods are as follows:

### Pen tip abrasion tendency:

Test sample is set on an automatic drawing device having an ink pen. Lines are drawn at a rate of 1000 meter per minute with the pen for a predetermined period of time. The pen tip is observed with a microscope to evaluate the degree of abrasion.

### Pencil writability:

Five lines (each 10 cm length) are drawn on test sample with a pencil (core diameter: 0.5 mm, hardness: HB, tradename: HI-POLYMER manufactured by Pentel Inc.). The written lines are observed with a microscope to evaluate writability.

### Ink pen writability:

Five lines (each 10 cm length) are drawn on test sample with an ink pen (ink: DRAWING SOL-A (tradename) manufactured by Kaimeisha). The written lines are observed with a microscope to evaluate writability.

### Ball point pen writability:

Five lines (each 10 cm length) are drawn on test sample with a ball point pen (MICROTIP PEN (tradename) manufactured by Steadler Japan Inc.). The written lines are observed with a microscope to evaluate writability.

### Pencil pattern erasability:

Five parallel lines (each 10 cm length) with a space of 1 mm are drawn on test sample with a pencil (core diameter: 0.5 mm, hardness: 2H, tradename: HI-POLYMER manufactured by Pentel Inc.). The lines are then rubbed (6 times reciprocations) with a plastic rubber eraser to evaluate the erasability.

### Pencil rewritability:

Five parallel lines (each 10 cm length) with a space of 1 mm are drawn on test sample with a pencil (core diameter: 0.5 mm, hardness: 2H, tradename: HI-POLYMER manufactured by Pentel Inc.). The lines are then rubbed (20 times reciprocations) with a plastic rubber eraser. Then, three parallel lines with a space of 1 mm are drawn on the sample so that the three lines cross the erased five parallel lines. The difference in density of the newly drawn lines between the crossed portions and non-crossed portions is measured for evaluation of rewritability. The smaller the difference, the better is the rewritability.

Evaluation in the above tests is made by 5 rank rating. The rank 5 is the best. The test results are also summarized in Table 1.

**Table 1**

| Sample No. | 1* | 2* | 3 | 4 | 5 | 6* | 7* |
|---|---|---|---|---|---|---|---|
| Ingredient: | | | | | | | |
| Melamine resin | 10 | 10 | 10 | 10 | 10 | 10 | 10 |
| Acrylic emulsion | 43 | 43 | 43 | 43 | 43 | 43 | 43 |

| Matting agent | | | | | | | |
|---|---|---|---|---|---|---|---|
| Kaolin | - | 0.5 | 1 | 2 | 5 | 7 | 12 |
| Benzoguanamine | 12 | 11.5 | 11 | 10 | 7 | 5 | - |
| Ammonium chloride | 0.4 | 0.4 | 0.4 | 0.4 | 0.4 | 0.4 | 0.4 |
| Water | 63 | 63 | 63 | 63 | 63 | 63 | 63 |

| Properties: | | | | | | | |
|---|---|---|---|---|---|---|---|
| Pen tip abrasion tendency | 5 | 5 | 5 | 4 | 4 | 3 | 1 |
| Pencil writability | 5 | 5 | 5 | 5 | 5 | 5 | 5 |
| Ink pen writability | 5 | 5 | 5 | 5 | 5 | 5 | 5 |
| Ball point pen writability | 5 | 5 | 5 | 5 | 5 | 5 | 5 |
| Pencil pattern erasability | 3 | 3 | 4 | 5 | 5 | 5 | 4 |
| Pencil rewritability after erasion | 3 | 3 | 4 | 5 | 5 | 5 | 4 |

| | | | | | | | |
|---|---|---|---|---|---|---|---|
| *: Comparative Samples | | | | | | | |

## Claims

1. A composite material comprising a film formed of a synthetic resin, and a mat layer provided over at least one surface of said film and containing a binder resin and a matting agent consisting of an organic filler having an average particle size of 10 »m or less and an inorganic filler:
characterized in that said inorganic filler is a substance having an average particle size of 10 »m or less and selected from sericite, calcined sericite, kaolin minerals, calcined kaolin minerals, pyrophyllite, calcined pyrophyllite and mixtures thereof;
in that the weight ratio of said organic filler to said inorganic filler ranges from 1.4:1 to 11.5:1; and
in that the weight ratio of said matting agent to said binder resin is 0.05:1 to 0.7:1.

2. A composite material according to Claim 1, wherein the average particle sizes of said organic filler and said inorganic filler are each 0.5-9 »m.

3. A composite material according to Claim 2, wherein the average particle sizes of said organic filler and said inorganic filler are each 1-5 »m.

4. A composite material according to any preceding claim, wherein said inorganic filler is kaolinite, halloysite, metahalloysite, nacrite, kaolin, or a mixture thereof.

5. A composite material according to any preceding claim, wherein said binder resin consists of a mixture of an acrylic resin and a melamine resin and/or a urea-formaldehyde resin.

## Patentansprüche

1. Kompositmaterial bestehend aus einer aus Kunstharz gebildeten Schicht und einer matten Schicht über mindestens einer Oberfläche der genannten Schicht und mit einem Bindemittelharz sowie einem Mattierungsmittel bestehend aus einem organischen Füllmittel mit einer durchschnittlichen Partikelgröße von 10 »m oder weniger und einem anorganischen Füllmittel, dadurch gekennzeichnet, daß das anorganische Füllmittel eine Substanz mit einer durchschnittlichen Partikelgröße von 10 »m oder weniger ist und ausgewählt ist aus Sericit, kalziniertem Sericit, Kaolinmineralen, kalzinierten Kaolinmineralen, Pyrophyllit, kalziniertem Pyrophyllit und Mischungen derselben, daß das Gewichtsverhältnis des organischen Füllmittels zu dem anorganischen Füllmittel zwischen 1,4:1 und 11,5:1 liegt und daß das Gewichtsverhältnis des Mattierungsmittels zu dem Bindemittelharz 0,05:1 bis 0,7:1 beträgt.

2. Kompositmaterial nach Anspruch 1, dadurch gekennzeichnet, daß die durchschnittlichen Partikelgrößen des organischen Füllmittels und des anorganischen Füllmittels jeweils 0,5-9 »m sind.

3. Kompositmaterial nach Anspruch 2, dadurch gekennzeichnet, daß die durchschnittlichen Partikelgrößen des organischen Füllmittels und des anorganischen Füllmittels jeweils 1-5 »m sind.

4. Kompositmaterial nach einem der obigen Ansprüche, dadurch gekennzeichnet, daß das anorganische Füllmittel Kaolinit, Halloysit, Metahalloysit, Nakrit, Kaolin oder ein Gemisch derselben ist.

5. Kompositmaterial nach einem der obigen Ansprüche, dadurch gekennzeichnet, daß das Bindemittelharz aus einem Gemisch aus einem Acrylharz und einem Melaminharz und/oder einem Urea-Formaldehydharz besteht.

## Revendications

1. Matériau composite comprenant un film constitué d'une résine synthétique et une couche matte prévue par dessus au moins une surface du film et qui contient une résine formant liant et un agent de matage constitué d'une charge organique ayant une taille moyenne des particules de 10 »m ou moins et d'une charge inorganique, caractérisé en ce que :
ladite charge inorganique a une taille moyenne des particules de 10 »m ou moins et est choisie parmi la séricite, la séricite calcinée, les minéraux à base de kaolin, les minéraux à base de kaolin calciné, la pyrophyllite, la pyrophyllite calcinée et leurs mélanges;
le rapport en poids de ladite charge organique à ladite charge inorganique est compris entre 1,4:1 et 11,5:1; et
le rapport en poids du dit agent de matage à ladite résine formant liant est de 0,05:1 à 0,7:1.

2. Matériau composite selon la revendication 1, dans lequel les tailles moyennes des particules de ladite charge organique et de ladite charge inorganique sont chacune comprises entre 0,5 et 9 »m.

3. Matériau composite selon la revendication 2, dans lequel les tailles moyennes des particules de ladite charge organique et de ladite charge inorganique sont chacune comprises entre 1 et 5 »m.

4. Matériau composite selon l'une quelconque des revendications précédentes, dans laquelle ladite charge inorganique est de la kaolinite, de l'halloysite, de la métahalloysite, de la nacrite, du kaolin ou un mélange de ces substances.

5. Matériau composite selon l'une quelconque des revendications précédentes, dans lequel ladite résine formant liant est constituée d'un mélange d'une résine acrylique et d'une résine à base de mélamine et/ou d'une résine urée-formaldéhyde.
